# DEMANDE DE BREVET EUROPEEN

(11) **EP 0 981 954 A1**
(43) Date de publication de la demande: **01.03.2000**
(21) Numéro de dépôt: 99402140.0
(22) Date de dépôt: 27.08.1999
(51) Int. Cl.: A01J 5/013

(54) **Procédé et système de maîtrise de l'état sanitaire de la mamelle et d'évaluation de la qualité physico-chimique du lait**

(30) Priorité: 27.08.1998 FR 9810752
(71) Demandeur: Institut National Polytechnique de Lorraine, F-54501 Vandoeuvre les Nancy (FR); Bragin, Vadim Igorevich, Mytischi, Moskovskaya obl. 141007 (RU)
(72) Inventeur: Cattaneo, Marco, 20025 Legnano, Milano (IT); Colonna, Andrea, 20012 Cuggiono, Milano (IT); Laurent, François, 54140 Jarville-La-Malgrange (FR); Le Roux, Yves, 54500 Vandoeuvre Les Nancy (FR)
(74) Mandataire: Pontet, Bernard

(57) **Abrégé**

Procédé pour la maîtrise de l'état sanitaire de la mamelle et l'évaluation de la qualité physico-chimique du lait provenant de la traite d'animaux, comprenant des mesures de conductibilité électrique du lait au niveau de griffes de traite (G1, Gi, Gn) d'un système de traite (ST) automatisé, chaque griffe de traite (G1, Gi, Gn) étant équipée de plusieurs capteurs de conductibilité électrique associés chacun à un quartier du pis d'un animal.

Ce procédé comprend les étapes suivantes:
- acquisition de données brutes de conductibilité électrique mesurées au cours d'une traite pour une succession d'animaux ayant transité dans chaque box (B1, Bi, Bn) et pour chaque quartier,
- mise à jour périodique de fichiers contenant des constantes de cellule de chaque capteur de quartier d'un box donné (B1, Bi, Bn), et
- détermination de données de conductibilité effectives à partir des données brutes de conductibilité et des constantes de cellule.

Utilisation notamment pour la détection des mammites et mesure de la qualité physico-chimique du lait dans les élevages laitiers bovins, ovins et caprins.

## Description

La présente invention concerne un procédé de maîtrise de l'état sanitaire de la mamelle et d'évaluation de la qualité physico-chimique du lait.

Le domaine de l'invention est celui de la production laitière et en particulier l'équipement des salles de traite pour l'industrie laitière bovine, caprine et ovine.

Les contraintes sanitaires, technologiques et économiques sont de plus en plus sévères et pourraient imposer :
- l'utilisation d'un procédé de détection pour la maîtrise des mammites afin de mettre en route le plus rapidement possible les traitements thérapeutiques appropriés les mesures de prophylaxie et le contrôle de l'efficacité des traitements;
- la prédiction de la qualité physico-chimique du lait adaptée aux besoins de l'industrie laitière.

Il existe déjà des procédés pour évaluer l'état sanitaire de la mamelle qui mettent en oeuvre des appareils de mesure de la conductibilité électrique du lait à la sortie des pis des vaches. Ces appareils de mesure comportent des sondes implantées dans les griffes de traite.

Le document EP397274 divulgue un détecteur de mammite pour bétail laitier comportant une configuration particulière d'électrodes au sein d'une chambre de mesure de conductibilité électrique du lait.

Le document EP211386 divulgue un procédé pour détecter la mammite, dans lequel des valeurs d'impédance successives sont stockées en vue d'être évaluées, les résultats de cette analyse pouvant être utilisés pour activer un affichage indiquant qu'une inflammation a été détectée.

Le document US3989009 divulgue un système de mesure de conductibilité du lait effectuée à proximité immédiate du pis d'une vache.

Le document EP 534565 divulgue un procédé de traite pour animaux mettant en oeuvre un détecteur sensible au flux de lait qui produit un signal lorsque le flux de lait en provenance d'un trayon cesse. Ce signal est utilisé pour une commande automatisée des opérations de traite et pour le traitement des données mesurées notamment par des cellules de conductibilité.

Le document US 5416417 divulgue un procédé de contrôle mettant en oeuvre un traitement des résultats de mesure de conductibilité électrique sur plusieurs jours afin de prédire la survenance d'une mammite.

On connaît ainsi déjà les principes et techniques de base de la détection d'une mammite par comparaison de mesures de conductibilité électrique, l'utilisation de signaux radiofréquences pour la mesure de conductibilité du lait, et le stockage de valeurs d'impédance successives et leur traitement en vue de détecter une mammite. Mais les données délivrées par ces appareils de mesure ne sont généralement traitées que de façon globale.

Le but de la présente invention est de remédier à ces inconvénients en proposant un procédé d'analyse de conductibilité électrique qui procure des informations précises et performantes permettant une meilleure évaluation de la qualité physico-chimique du lait et une détection plus efficace des mammites cliniques et subcliniques.

Cet objectif est atteint par l'utilisation des mesures de conductibilité électrique du lait au niveau de griffes d'un système de traite automatisé, chaque griffe étant équipée de plusieurs capteurs de conductibilité électrique associés chacun à un quartier du pis d'un animal.

Suivant l'invention, ce procédé comprend les étapes suivantes :
- acquisition de données brutes de conductibilité électrique en continu pour chaque quartier de chaque animal,
- détermination de données de conductibilité effectives à partir des données brutes de conductibilité et des constantes de cellule.

L'analyse des données de conductibilité électrique repose ensuite sur une comparaison des valeurs de conductibilité électrique entre quartiers d'un même animal sur plusieurs traites en utilisant un quartier de référence (le quartier avec la conductibilité électrique la plus basse), qui permet d'identifier l'apparition d'une inflammation sur l'un des quartiers et d'estimer le changement de la qualité du lait du quartier.

Cette comparaison entre quartier, donnée en pourcentage, permet d'évaluer l'intensité de l'inflammation et de déterminer un coefficient pour l'évaluation de la qualité du lait.

Les différences de conductibilité entre le matin et le soir du quartier de référence et du ou des quartiers atteints complètent l'analyse et améliorent le diagnostic.

Dans une forme préférée de réalisation du procédé selon l'invention, les données de mesure sont ensuite distribuées dans des fichiers créés pour chaque animal, chaque fichier contenant l'évolution temporelle des mesures de conductibilité pour chaque quartier de cet animal.

Suivant un autre aspect de l'invention, l'analyse des données de conductibilité électrique devra évaluer la qualité physico-chimique du lait de quartier, du lait de mélange des quatre quartiers (lait individuel) et du lait de tank (mélange des laits individuels).

Un mérite important du procédé selon l'invention réside dans le fait que tout au long du processus, on conserve d'une part, les données brutes de mesure, et d'autre part, les constantes de cellule de chacun des quatre capteurs équipant chaque box de traite. Ce découplage permet notamment d'effectuer une correction a posteriori des mesures de conductibilité s'il s'avère que des capteurs de cellule se trouvent décalibrés.

Dans une forme particulière de mise en oeuvre du procédé selon l'invention, la détermination des constantes de cellule est obtenue en utilisant un capteur d'étalonnage placé dans le circuit de nettoyage de la salle de traite.

En pratique, cette détermination des constantes de cellule peut comprendre :
- une lecture de la valeur de la conductibilité électrique du capteur d'étalonnage;
- une attente jusqu'à ce qu'une solution de nettoyage soit présente dans tous les capteurs des griffes de traite;
- une mise à jour périodique de fichiers contenant des constantes de cellule de chaque capteur de quartier d'un box donné;
- une lecture de la valeur de conductibilité électrique des capteurs des griffes de traite;
- une comparaison entre la conductibilité électrique provenant du capteur d'étalonnage et les conductibilités provenant des autres capteurs; et
- une mise à jour des valeurs de constantes de cellule de sorte que la conductibilité électrique des capteurs de griffe corresponde à celle du capteur.

Plus généralement, la présente invention contribue, par l'élaboration des données de conductibilité électrique effective dans le procédé pour chaque quartier, à une détection précoce des mammites cliniques et subcliniques qui devrait permettre d'améliorer l'état sanitaire des troupeaux laitiers et de fournir à la filière un lait de qualité physico-chimique constante.

Par ailleurs, le procédé d'étalonnage développé dans la présente invention peut être considérée comme une solution avantageuse pour résoudre le problème du nécessaire étalonnage des capteurs de conductibilité mis en oeuvre dans le procédé de détection.

D'autres particularités et avantages de l'invention apparaîtront encore dans la description ci-après. Aux dessins annexés donnés à titre d'exemples non limitatifs:
- la figure 1 est une vue synoptique d'un système de maîtrise de l'état sanitaire de la mamelle et d'évaluation de la qualité physico-chimique du lait selon l'invention, associé à un système de traite;
- la figure 2 illustre un exemple de réalisation d'une cellule conductimétrique mise en oeuvre au sein des griffes d'un système de contrôle de qualité selon l'invention;
- la figure 3 est un schéma synoptique illustrant, au sein du procédé selon l'invention, une partie du logiciel d'acquisition des données;
- la figure 4 est un schéma synoptique illustrant, au sein du procédé selon l'invention, une partie du logiciel de création de fichiers personnalisés;
- la figure 5 est un schéma synoptique illustrant, au sein du procédé selon l'invention, une partie du logiciel de visualisation de la conductibilité électrique du lait quartier par quartier d'une traite d'une vache et pour la détection d'une mammite;
- la figure 6 est un schéma synoptique illustrant, au sein du procédé selon l'invention, une partie du logiciel pour l'étalonnage du système de contrôle de qualité;
- la figure 7 illustre une visualisation d'une évolution temporelle de la conductibilité électrique correspondant à une situation de détection d'une mammite dans une situation normale pour toute la période "A";;
- la figure 8 illustre une visualisation d'une évolution temporelle de la conductibilité électrique correspondant à une transition d'une situation normale pour la période "A" à une situation de préalarme pour la période "B", suivie d'une situation de grave pathologie mammaire pour la période "BB";
- la figure 9 illustre une visualisation d'une évolution temporelle de la conductibilité électrique correspondant à une transition d'une situation d'alarme pour la période "B" à une situation normale pour la période "A";
- la figure 10 illustre un premier exemple de visualisation d'une évolution de la conductibilité électrique correspondant à une traite d'une vache en situation d'alarme en prenant en compte la variation de l'aire (S) sous la courbe des variations de la conductibilité électrique; et
- la figure 11 illustre un second exemple de visualisation d'une évolution de la conductibilité électrique correspondant à une traite d'une vache en situation d'alarme en prenant en compte des variations d'aire (S1, S2) sous des courbes de variation de la conductibilité électrique.

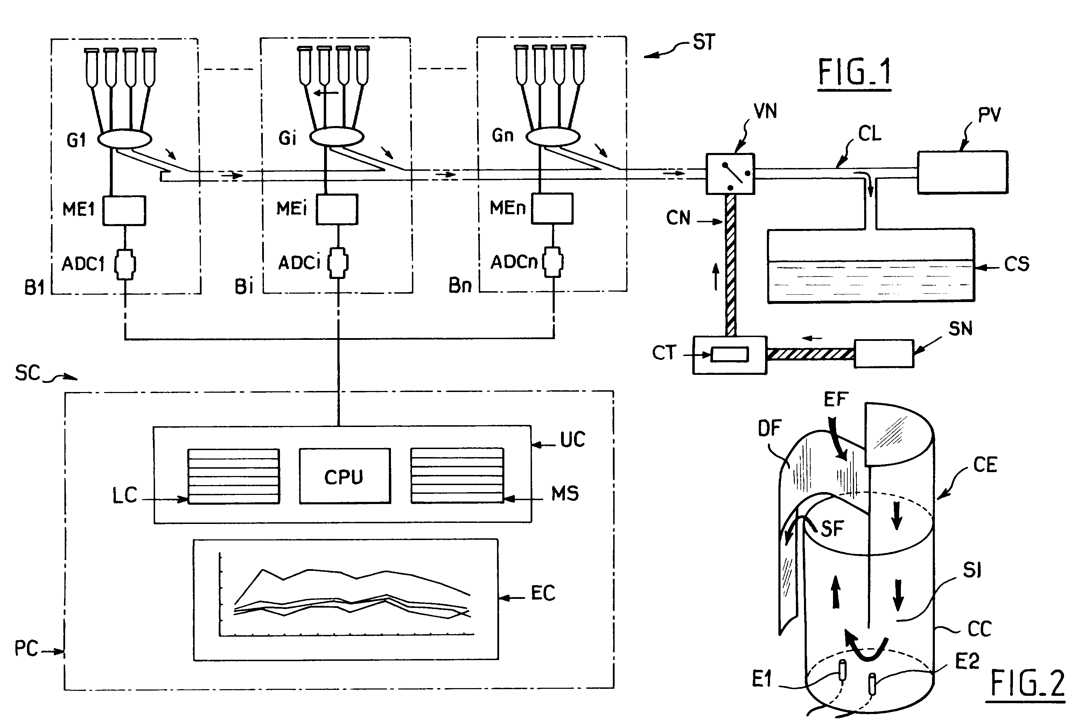

Est décrit maintenant, en référence aux figures 1 et 2, un exemple de réalisation d'un système de maîtrise de l'état sanitaire de la mamelle et d'évaluation de la qualité physico-chimique du lait selon l'invention. Au préalable, il convient de noter que ce système de contrôle SC est conçu pour être adapté à tout système ST de traite automatisé nouveau ou déjà en activité. Un système de traite automatisée ST comprend généralement un ensemble de box B1, Bi, Bn ou postes de traite équipés chacun d'une griffe de traite G1, Gi, Gn destinée à être appliquée sur les pis d'un animal et reliée à un circuit CL de collecte du lait pourvu d'une pompe à vide PV et d'une cuve de collecte CS réfrigérée. Le système de traite ST est en outre équipé d'un circuit de nettoyage CN permettant de faire circuler dans les griffes G1, Gi, Gn et les tuyauteries du circuit de collecte CL un liquide de nettoyage, par exemple de l'eau additionnée de lessive délivré par une système de nettoyage SN. Le circuit de nettoyage CN, dans lequel est inséré un capteur d'étalonnage CT, peut être placé en communication avec le circuit de traite au moyen d'une vanne de nettoyage VN.

Le système SC de maîtrise de l'état sanitaire de la mamelle et d'évaluation de la qualité physico-chimique du lait selon l'invention est constitué d'un ensemble de cellules conductimétriques insérées dans chaque griffe de traite G1, Gi, Gn, d'un ensemble de modules électroniques ME1, Mei, Men reliés, d'une part, chacun à une griffe et d'autre part, à un ordinateur PC prévu pour collecter et traiter les données de mesure.

Chaque griffe de traite G1, Gi, Gn est pourvue de quatre cellules conductimétriques conçues pour capturer le lait de chaque quartier et permettre une mesure de la conductibilité électrique de ce lait. Une cellule conductimétrique mise en oeuvre dans un système de contrôle de qualité selon l'invention comprend par exemple, en référence à la figure 2, un corps cylindrique CC comportant un orifice supérieur d'entrée EF du flux de lait, un siphon SI, un déflecteur de sortie DF et deux électrodes E1, E2 positionnées à la base dudit corps cylindrique CC. Le siphon SI et le déflecteur DF ont pour fonction de maintenir un niveau de lait constant dans la cellule CE, indépendamment du flux entrant, ce qui évite la formation de mousse. Les électrodes E1, E2 sont alimentées à basse tension (par exemple, 1 Volt) en courant alternatif à une fréquence d'environ 100 kHz, à partir d'un module électronique ME1, Mei, Men associé à chacune des griffes G1, Gi, Gn. Le signal de sortie constitué par une image du courant injecté dans la cellule conductimétrique CE est converti en un signal de courant continu à proximité de la griffe G1, Gi, Gn, puis transmis à un module convertisseur analogique/numérique ADC1, ADCi ADCn installé dans la salle de traite. Ces modules électroniques sont reliés en réseau pour transmettre les données sur l'ordinateur PC qui pilote également l'application de la tension alternative sur les cellules conductimétriques. L'ordinateur PC est agencé pour stocker et exécuter un logiciel LC d'acquisition, d'élaboration et de visualisation et un ensemble cumulé MS de données de mesure acquises et traitées, et pour fournir des visualisations EC d'évolutions temporelles de conductibilité électrique.

Pour une description détaillée des équipements et concepts mis en oeuvre dans un système de contrôle de qualité selon l'invention, on peut utilement se référer à l'article "Sistemi di individuazione automatica della mastite" paru dans la revue "L'Informatore Agrario" 45/95 pages 23-29.

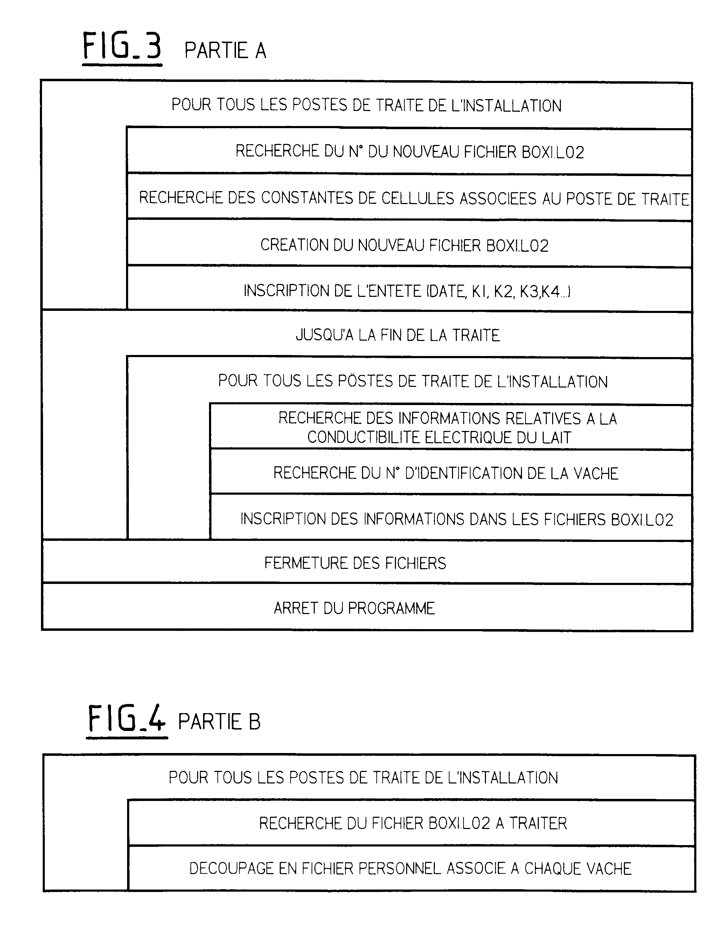

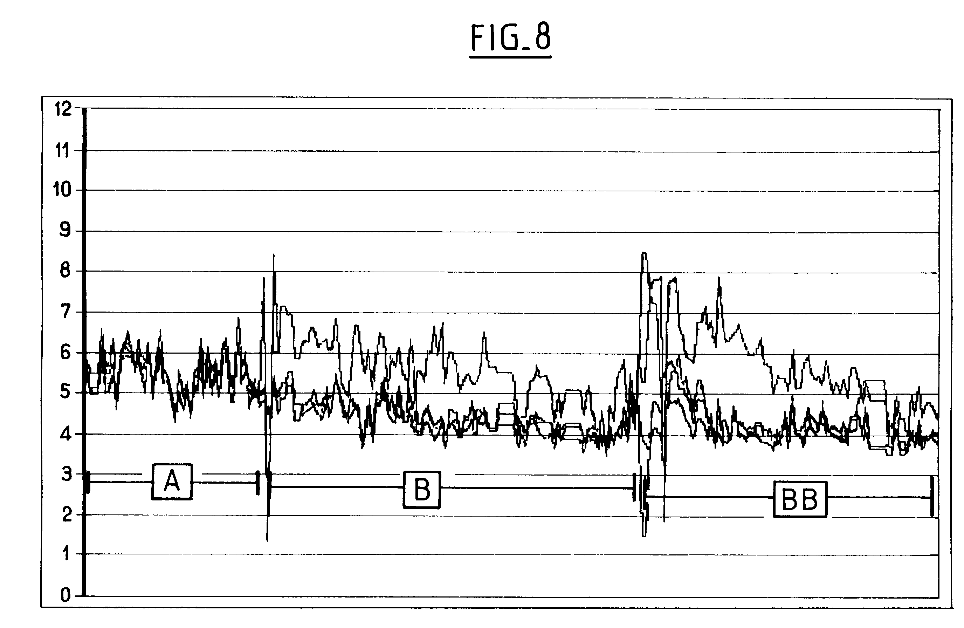

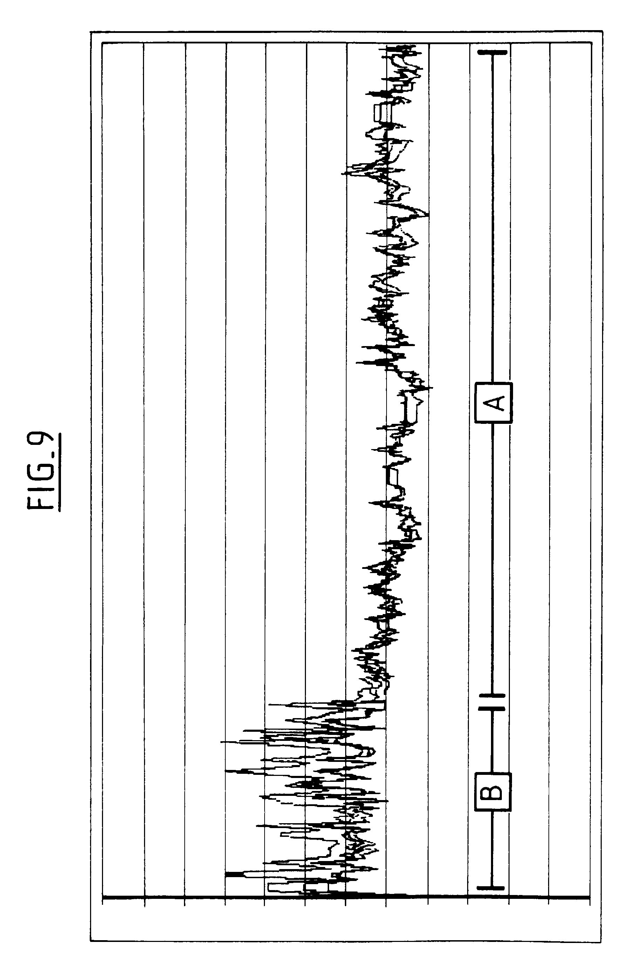

On va maintenant décrire, en référence aux figures 3 à 11, un exemple de mise en oeuvre du procédé selon l'invention.

Chaque équipement de mesure de conductibilité électrique, qui est constitué par quatre cellules de mesure insérées dans une griffe et un module électronique associé est attaché à un box (poste) de traite B1, Bi, Bn donné.

Une première étape consiste en l'acquisition de données brutes de conductibilité électrique (générées par ME1, Mei, Men) et mesurées au cours d'une traite pour une succession de vaches ayant transité dans ce box B1, Bi, Bn et pour chaque quartier.

Des fichiers contenant les constantes de cellule de chaque capteur de quartier d'un box donné B1, Bi, Bn sont par ailleurs périodiquement mis à jour et sont utilisés ultérieurement pour déterminer des données de conductibilité effectives.

Les données de mesure sont ensuite distribuées dans des fichiers créés pour chaque vache, chaque fichier contenant alors, pour une vache donnée, l'évolution temporelle des mesures de conductibilité pour chaque quartier de cette vache.

Une visualisation et une observation de l'évolution au cours du temps de la différence de la conductibilité électrique entre les quatre quartiers d'une vache permettent d'identifier l'apparition d'une inflammation sur l'un des quartiers de cette vache.

La détermination des constantes de cellule est obtenue en utilisant un capteur d'étalonnage CT strictement identique aux capteurs de conductibilité CE utilisés dans les griffes de traite G1, ..Gi,..Gn, ce capteur d'étalonnage CT étant placé dans le circuit de nettoyage CN de la salle de traite.

Cette détermination comprend:
- une lecture de la valeur de la conductibilité électrique du capteur d'étalonnage CT,
- une attente jusqu'à ce qu'une solution de nettoyage soit présente dans tous les capteurs CE des griffes de traite,
- une lecture de la valeur de conductibilité électrique des capteurs CE des griffes de traite,
- une comparaison entre la conductibilité électrique provenant du capteur d'étalonnage CT et les conductibilités provenant des autres capteurs CE, et
- une mise à jour des valeurs de constantes de cellule de sorte que la conductibilité électrique des capteurs de griffe CE corresponde à celle du capteur CT.

On va maintenant décrire un exemple d'agencement et d'organisation du logiciel d'un système expert matérialisant le procédé mis en oeuvre dans le système de maîtrise de l'état sanitaire de la mamelle selon l'invention.

Une première partie (A) du logiciel réalise, en référence à la figure 3 , l'acquisition des données sur un ensemble de postes de traite (boxl, box2, box3, box4) et la constitution de fichiers de données "Boxi.lo2" pour chaque box. Les mesures de conductibilité électrique sont converties en données numériques au moyen d'un module ADAM série 4000 suivant des techniques classiques. Chaque fichier de données comprend quatre séries de données correspondant chacune à un capteur de conductibilité associé à un quartier. La première ligne de chaque fichier est constituée par les quatre constantes de cellules k1, k2, k3, k4 associées à la griffe de traite équipant le box concerné par le fichier de données qui contient ensuite la liste des valeurs de conductance mesurées par les capteurs pour ce box au cours d'une traite. Les constantes de cellule sont lues dans des fichiers de constantes de cellule "fichier constant.bi" qui sont périodiquement mis à jour. A chaque box est associé un fichier de constante de cellules.

Une seconde partie (B) du logiciel a pour fonction la lecture de l'ensemble des fichiers d'acquisition "*.lo2" créés par la partie logicielle A et l'écriture de fichiers personnels associés à chaque vache. Cette partie B du logiciel effectue ainsi la lecture de tous les fichiers "*.lo2" issus d'une traite et d'un box, assigne à chaque vache des valeurs de conductibilité et crée un fichier de traite, en référence à la figure 4. Les valeurs de conductibilité électrique sont par exemple exprimées en mS/cm. Les opérations d'assignation peuvent être manuelles ou automatiques. Après exécution de cette partie du logiciel pour un box donné, chacune des vaches traites dans ce box est désormais munie d'un fichier personnel.

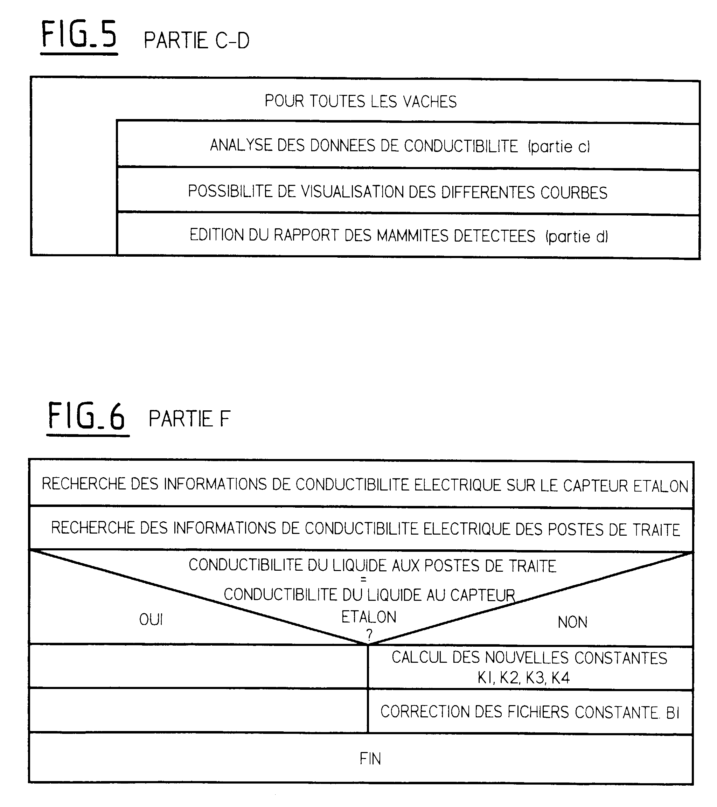

Une troisième partie (C) du logiciel réalise les fonctions de visualisation des courbes de conductibilité électrique. Il comprend, en référence à la figure 5, une lecture des fichiers personnalisés créés par la partie B et une visualisation des courbes de conductibilité électrique obtenues à partir d'une suite temporelle de valeurs de conductibilité électrique concernant une vache. La lecture des fichiers personnalisés est effectuée par ordre de date de création des fichiers originaux "*.lo2", donc par ordre chronologique des traites. On peut aisément prévoir pour ce logiciel une modalité de visualisation automatique selon laquelle, une fois ce logiciel lancé, il suffit de toucher une touche du clavier de l'ordinateur pour visualiser en séquence les fichiers.

Une quatrième (D) partie du logiciel (figure 5) élabore les données de conductibilité pour permettre la détection d'une mammite. Ce logiciel comprend:
- une lecture des fichiers "*muni.xxx" (fichiers personnalisés) et "munr.xxx" (fichiers personnalisés avec moyennes de groupe) créés par la partie B;
- une élaboration de données de détection;
- une visualisation des courbes de conductibilité électrique pour les N (par exemple 14) dernières traites;
- un traitement spécifique sur une vache.

Les fichiers "muni.xxx" sont lus par ordre de création des fichiers originaux "*.lo2", donc par ordre chronologique de traite.

On assigne une valeur de conductibilité électrique à chaque quartier pour chaque traite correspondant à la moyenne des N (par exemple, dix) valeurs les plus élevées.

Les valeurs moyennes sont mises en ordre (par date) et on visualise les résultats obtenus. Pour simplification, l'interface du logiciel dispose de différents niveaux de communication des résultats du plus simple au plus détaillé.

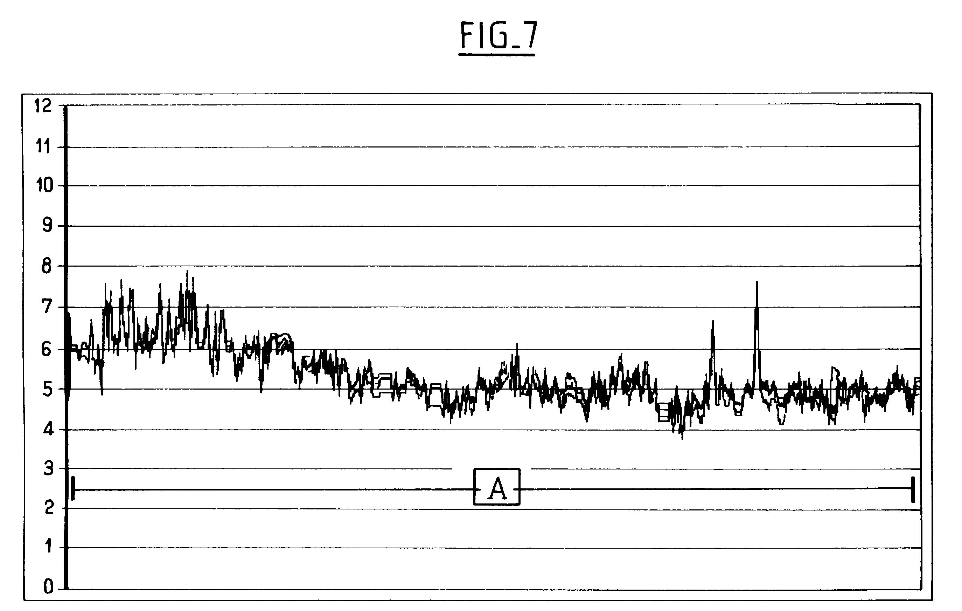

Lorsqu'on effectue une analyse historique, on obtient une visualisation telle que celle représentée en figures 7, 8 et 9 qui correspond à un suivi d'une vache sur les quatre quartiers pendant six mois de traite (120 données de conductibilité électrique).

Bien entendu, on peut prévoir d'autres situations caractéristiques. Par ailleurs, ce logiciel de diagnostic peut être utilisé en mode automatique: une fois qu'il est lancé, il suffit d'insérer le numéro de la vache que l'on veut examiner ou, en mode automatique, communiquer (ou imprimer) la vache posant problème au sein du troupeau.

Dans une version complétée du logiciel de diagnostic qui vient d'être décrit, il est prévu un logiciel E d'élaboration des données pour la détection d'une mammite et d'analyse historique. En plus des fonctionnalités du logiciel D, le logiciel E réalise une mise en ordre (par date) des valeurs de conductibilité électrique assignées et une visualisation de tout l'historique des valeurs de conductibilité électrique de la vache. En outre, il offre la possibilité d'enregistrer le fichier visualisé pour un accès plus rapide. Une fois ce logiciel lancé, il suffit d'insérer le numéro de la vache que l'on veut examiner.

L'étalonnage du système de contrôle de qualité selon l'invention est réalisé en exécutant la partie F d'étalonnage dont les fonctionnalités sont:
- une acquisition des données du capteur d'étalonnage et des données des capteurs disposés dans les griffes de traite;
- une comparaison entre les valeurs du capteur d'étalonnage et les autres;
- une mise à jour (réécriture) des fichiers de contantes de cellule.

Le système d'étalonnage correspondant à la partie F d'étalonnage met en oeuvre le système traditionnel de nettoyage de la salle de traite et un conductimètre pour étalonner le capteur d'étalonnage. La partie F d'étalonnage exécute, en référence à la figure 6, les opérations suivantes:
- lecture de la valeur de conductibilité électrique du capteur d'étalonnage CT (conductance∗Kc) ;
- attente jusqu'à ce que la solution d'étalonnage (par exemple, de l'eau additionnée de lessive) soit présente dans tous les capteurs CE des griffes;
- lecture de la valeur de conductibilité électrique des capteurs des griffes (conductance*K1,...) ;
- comparaison entre la conductibilité électrique fournie par le capteur d'étalonnage CT et la conductibilité électrique fournie par les autres capteurs CE;
- variation des valeurs des constantes de cellule pour faire en sorte que la valeur "conductance*K1" corresponde à celle du capteur d'étalonnage CT.

Il est à noter que les logiciels qui viennent d'être décrits peuvent avoir d'autres paramètres exploitables pour augmenter l'efficacité de détection, tels que le numéro et le stade de lactation. On peut également utiliser des moyennes mobiles entre trois traites, en confrontant la moyenne de trois traites avec les trois précédentes. On peut aussi prévoir dans le cadre de la présente invention des logiciels permettant de réaliser un tri du lait en fonction de sa qualité, avec des paramètres décisionnels basés sur la conductibilité électrique.

En ce qui concerne l'évaluation de la qualité physico-chimique du lait, les étapes de la procédure seront décrites en prenant comme exemple le pilotage du dénombrement cellulaire du lait de tank.

Les éléments nécessaires pour cette estimation sont en partie acquis par le système et en partie fournis par d'autres sources de données.

Une première étape consiste en l'acquisition des données de production par vache (Pv) et de dénombrement cellulaire vache par vache (DCv).

Le système calcule ensuite par chaque animal la production par quartier (Pq) en utilisant les signaux émis par les quatre capteurs d'une griffe. Ces données seront reparties en fonction de la production par vache (Pv) pour obtenir la production du chaque quartier (Pq) de la vache.

Puis on calcule un coefficient de quartier (Cfq) pour chaque quartier à partir du volume produit par chacun des quartiers (Pq) et du dénombrement cellulaire par quartier (DCq).

Le cumul des quatre coefficients de quartier (Cfq, un par quartier) permet de calculer un coefficient "vache" initial (Cfvi) caractérisant le pois relatif du lait de l'animal par rapport à l'ensemble du lait du troupeau.

Les données enregistrées par le système à travers la mesure de la conductibilité électrique par quartier permettent une mise à jour, à chaque traite et pour chaque animal, des productions par quartier (Pq) et du dénombrement cellulaire du quartier (DCq) et donc du coefficient de quartier (Cfq).

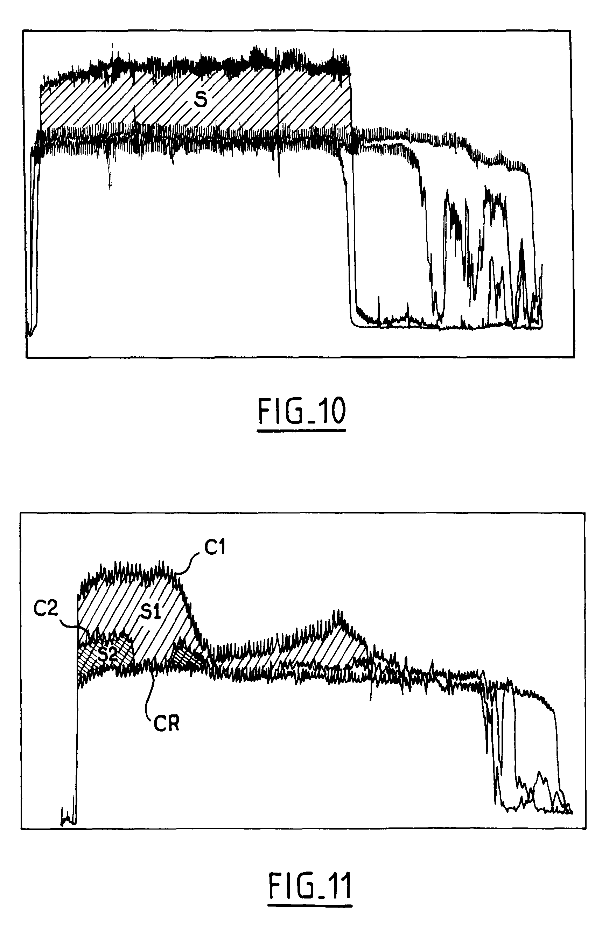

Le nouveau coefficient de quartier (Cfq) est estimé en prenant en compte la variation de l'aire (Cfva) dans la courbe des variations de la conductibilité électrique en référence aux figures 10 et 11, les variations du dénombrement cellulaire du quartier (DCq) étant proportionnelles à la surface de l'aire. Le produit "Production du quartier (Pq) et DC" donne le nouveau coefficient de quartier actualisé (Cfqa).

Dans le premier exemple de visualisation des variations de conductibilité électrique représenté en figure 10, l'aire S prise en considération est comprise entre une courbe "haute" correspondant à un quartier présentant un problème d'inflammation et des courbes "basses" correspondant aux trois autres quartiers.

Dans le second exemple de visualisation représenté en figure 11, deux aires S1, S2 correspondant à deux quartiers présentant une conductibilité électrique s'éloignant significativement d'un niveau de référence peuvent être prises en considération pour déterminer de nouveaux coefficients de quartier Cfq.

L'aire S1 est comprise entre une première courbe C1 de conductibilité correspondant à un premier quartier présentant un problème d'inflammation significatif et une courbe "basse" de référence CR, tandis que l'aire S2 est comprise entre une seconde courbe C2 de conductibilité correspondant à un second quartier moins affecté et la courbe "basse" de référence CR.

Le cumul des nouveaux coefficients de quartier actualisés (Cfqa) permet la mise à jour du coefficient "vache" initial (Cfvi) en coefficient "vache" actualisée (Cfva). Les coefficients Cfq sont recalculés à partir de ces données, leur cumul permettant une nouvelle estimation du Cfv.

Le cumul des Cfva permet alors une estimation du coefficient du tank (Cft) et donc du valeur du dénombrement cellulaire du tank (DCt) après pondération par le volume de lait stocké.

L'opération peut être réalisée après chaque traite ou sur le cumul de plusieurs traites.

A titre d'exemple non limitatif, on peut en envisager l'algorithme suivant :
Cfqi = Pq x DCq
Cfvi = Σ Cfqi
Cft = Σ Cfvi

S'il existe des pathologies et donc des changements de la conductibilité électrique des quartier des vaches, le système recalcule le Pq et le DCq pour la mise à jour en appliquant le même algorithme :
Dcqa ↔ Cfva = DCqa
Cfqa = Pqa x DCqa
Cfva = Σ Cfqa
Cfta = Σ Cfva
DCt = Cfta x litrage

La prise en compte de la variabilité des Cfq et des Cfv par rapport aux valeurs initiales (Cfvi à Cfva) permet de piloter la valeur du dénombrement cellulaire du lait du tank et d'optimiser la production.

Cette opération est obtenue grâce au calcul de la différence entre le coefficient du tank (Cft) et le coefficient du tank objectif (Cfto). Dans ces conditions, le système permet d'identifier la ou les traites des vaches à écarter de la collecte en utilisant les Cfv.

A titre d'exemple non limitatif, l'algorithme suivant peut alors être utilisé :
Cfte = Cft - Cfto*
Cfte = n traite Cfv
Cft - n traite Cfv = Cfto
*ex. 4000 litres à 200.000 cellule/ml = 80 (Cftc)

Pour une description détaillée des mesures et concepts mis en oeuvre dans un système de contrôle de la qualité du lait selon l'invention, on peut utilement se référer à l'article "Conservation et maîtrise des propriétés technologiques du lait à la production, Rencontres AGORAL 1997". Par ailleurs, il est à noter que
les procédures qui viennent d'être décrites peuvent être étendues à d'autres paramètres physico-chimiques.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour la maîtrise de l'état sanitaire de la mamelle et l'évaluation de la qualité physico-chimique du lait provenant de la traite d'animaux, comprenant des mesures de conductibilité électrique du lait au niveau de griffes de traite (G1, Gi, Gn) d'un système de traite automatisé (ST), chaque griffe de traite (G1, Gi, Gn) étant équipée de plusieurs capteurs de conductibilité électrique (CE) associés chacun à un quartier du pis d'un animal, caractérisé en ce qu'il comprend les étapes suivantes:
- acquisition de données brutes de conductibilité électrique mesurées au cours d'une traite pour une succession d'animaux ayant transité dans chaque box (B1, Bi, Bn) et pour chaque quartier,
- mise à jour périodique de fichiers contenant des constantes de cellule de chaque capteur de quartier d'un box donné (B1, Bi, Bn), et
- détermination de données de conductibilité effective à partir des données brutes de conductibilité et des constantes de cellule.

2. Procédé selon la revendication 1, caractérisé en ce que les données de mesure sont ensuite distribuées dans des fichiers créés pour chaque animal, chaque fichier contenant l'évolution temporelle des mesures de conductibilité pour chaque quartier de cet animal.

3. Procédé selon l'une des revendications 1 ou 2, caractérisé en ce que la détermination des constantes de cellule est obtenue en utilisant un capteur d'étalonnage (CT) placé dans le circuit de nettoyage (CN) du système de traite (ST).

4. Procédé selon la revendication 3, caractérisé en ce que cette détermination des constantes de cellule comprend:
- une lecture de la valeur de la conductibilité électrique du capteur d'étalonnage (CT),
- une attente jusqu'à ce qu'une solution de nettoyage soit présente dans tous les capteurs des griffes de traite (G1, Gi, Gn),
- une lecture de la valeur de conductibilité électrique des capteurs des griffes de traite (G1, Gi, Gn),
- une comparaison entre la conductibilité électrique provenant du capteur d'étalonnage (CT) et les conductibilités provenant des autres capteurs, et
- une mise à jour des valeurs de constantes de cellule de sorte que la conductibilité électrique des capteurs de griffe corresponde à celle du capteur d'étalonnage (CT).

5. Procédé selon l'une quelconque des revendications précédentes, caractérisé en ce qu'il comprend en autre une observation de l'évolution de la conductibilité électrique quartier par quartier d'un animal pour la détermination des paramètres physico-chimiques du lait.

6. Système (SC) pour l'évaluation et le pilotage de la qualité physico-chimique du lait provenant de la traite d'animaux, mettant en oeuvre le procédé selon l'une quelconque des revendications précédentes, associé à un système de traite (ST) comprenant un circuit (CL) de collecte du lait et un ensemble de griffes de traite (G1, Gi, Gn) reliées à ce circuit et situées chacune dans un box de traite (B1, Bi, Bn), ce système de contrôle (SC) comprenant pour chaque griffe de traite (G1, Gi, Gn) des moyens (CE) pour mesurer la conductibilité électrique du lait provenant de chaque quartier du pis d'un animal, caractérisé en ce qu'il comprend en outre:
- des moyens pour acquérir des données brutes de conductibilité électrique mesurées au cours d'une traite pour une succession d'animaux ayant transité dans chaque box (B1, Bi, Bn) et pour chaque quartier,
- des moyens pour mettre périodiquement à jour des fichiers contenant des constantes de cellule de chaque capteur de quartier d'un box donné, et
- des moyens pour déterminer des données de conductibilité effectives à partir des données brutes de conductibilité et des constantes de cellule.

7. Système (SC) selon la revendication 6, caractérisé en ce qu'il comprend en outre des moyens pour distribuer les données de mesure dans des fichiers créés pour chaque animal, chaque fichier contenant l'évolution temporelle des mesures de conductibilité pour chaque quartier de cet animal.

8. Système (SC) selon la revendication 7, caractérisé en ce qu'il comprend en outre des moyens pour observer l'évolution temporelle de la conductibilité électrique quartier par quartier d'un animal, en vue d'identifier l'apparition d'une inflammation sur l'un des quartiers de cet animal.

9. Système (SC) selon l'une quelconque des revendications 6 à 8, caractérisé en ce qu'il comprend en outre, pour la détermination des constantes de cellule, un capteur d'étalonnage (CT) placé dans le circuit de nettoyage (CN) du système de traite (ST).
